# FASCICULE DE BREVET EUROPEEN

(11) **EP 3 640 467 B1**
(45) Date de publication et mention de la délivrance du brevet: **19.05.2021**
(21) Numéro de dépôt: 19186990.8
(22) Date de dépôt: 18.07.2019
(51) Int. Cl.: F02K 1/82, F02C 7/14, G10K 11/172

(54) **TURBOMACHINE EQUIPEE D'UN SYSTEME THERMO-ACOUSTIQUE**
TURBOTRIEBWERK MIT THERMOAKUSTISCHEM SYSTEM
TURBINE ENGINE PROVIDED WITH A THERMOACOUSTIC SYSTEM

(30) Priorité: 19.10.2018 FR 1871234
(43) Date de publication de la demande: 22.04.2020
(73) Titulaire: AIRBUS OPERATIONS (S.A.S.), 31060 Toulouse (FR)
(72) Inventeur: ZEBIAN, Maxime, 31060 TOULOUSE Cedex 9 (FR)
(74) Mandataire: Gicquel, Olivier Yves Gérard

(56) Documents cités:
- EP-A1- 3 038 101
- EP-A1- 3 244 039
- US-A1- 2016 017 810
- US-A1- 2017 159 566

## Description

La présente invention concerne une turbomachine pour aéronef équipée d'un système thermo-acoustique pour refroidir les fluides nécessaires au fonctionnement de la turbomachine ainsi que pour atténuer les sons émis lors dudit fonctionnement.

Une turbomachine à double flux présente un conduit de soufflante, au travers duquel l'air soufflé par la soufflante de la turbomachine transite pour finalement être éjecté au niveau de l'échappement de la turbomachine. Le conduit de soufflante est délimité par des parois qui canalisent l'air. Ces parois sont formés de structures d'atténuation acoustique assurant une atténuation des ondes acoustiques générées par l'écoulement de l'air dans le conduit de soufflante et permettent ainsi d'atténuer le bruit de la turbomachine.

Les parois peuvent également être équipés d'échangeurs thermiques utilisés pour réaliser un échange thermique entre l'air circulant dans le conduit de soufflante et des canalisations transportant des fluides inflammables permettant le fonctionnement de la turbomachine (huile, kérozène) afin de refroidir ces derniers.

Or, l'implémentation d'échangeurs thermiques au niveau des parois du conduit de soufflante diminue la surface dévolue au traitement acoustique et par conséquent la capacité du traitement acoustique à atténuer le bruit de la turbomachine.

Afin de résoudre ce problème, il est connu par les documents EP3038101 ou US2016/017810, un système thermo-acoustique comprenant une structure d'atténuation acoustique dans laquelle sont arrangées des canalisations transportant des fluides à refroidir. La structure d'atténuation acoustique comprend des perforations permettant à l'air du conduit de soufflante de pénétrer dans son épaisseur afin de refroidir les canalisations et par conséquent les fluides.

Un des objectifs de la présente invention est de trouver une solution alternative au système thermo-acoustique du type décrit ci-dessus.

A cet effet, l'invention concerne une turbomachine à double flux pour aéronef tel que revendiquée à la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- La figure 1 est une vue schématique, en coupe selon son axe longitudinal, d'une turbomachine équipée d'un système thermo-acoustique selon un mode de réalisation de l'invention ;
- La figure 2 est une vue schématique du système thermo-acoustique représenté à la figure 1, ledit système comprenant un caloduc oscillant reliant une structure d'atténuation acoustique et un échangeur selon un mode de réalisation de l'invention ;
- La figure 3 est une vue schématique d'une structure d'atténuation acoustique du système thermo-acoustique de la figure 2, illustrant un premier mode de réalisation de ladite structure;
- La figure 4 est une vue schématique d'une structure d'atténuation acoustique du système thermo-acoustique de la figure 2, illustrant un second mode de réalisation de ladite structure;
- La figure 5 est une vue similaire à la figure 2 qui illustre le système thermo-acoustique selon un autre mode de réalisation de l'invention.

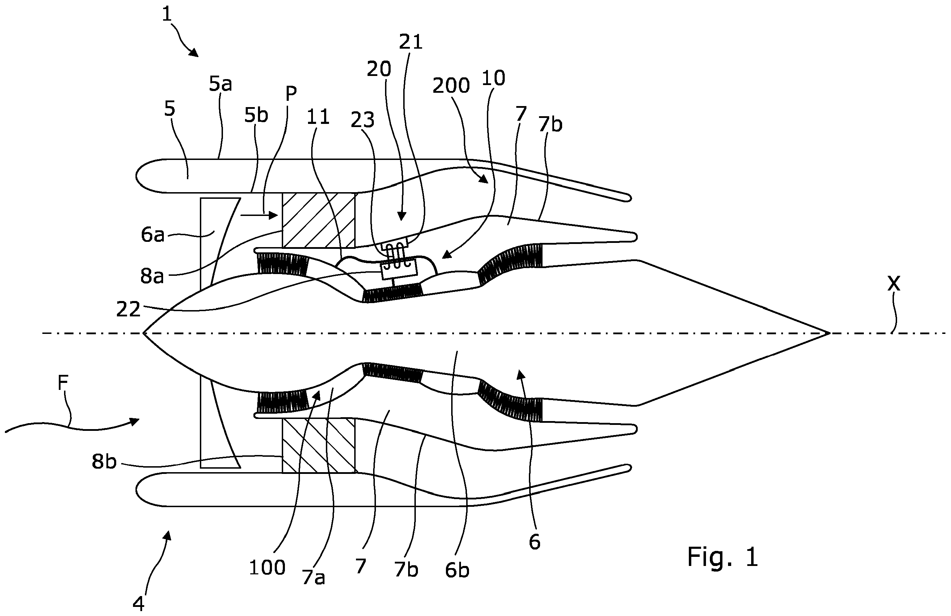

En référence avec la figure 1, une turbomachine 4 à double flux d'un aéronef (non représenté) comprend une nacelle annulaire 5, centrée sur un axe longitudinal X (dit axe moteur) et entourant un moteur 6.

Dans le sens d'écoulement d'un flux d'air (flèche F) traversant la turbomachine 4 lors du fonctionnement de cette dernière, le moteur 6 comprend d'amont en aval et centrés sur l'axe moteur X, une soufflante 6a, un corps du moteur 6b.

Le corps du moteur 6b comprend des éléments permettant de faire tourner la soufflante 6a lorsque le moteur 6 est mis en marche. La turbomachine 4, comprend de plus, en aval de la soufflante 6a, une interveine annulaire 7 concentrique au corps du moteur 6. L'interveine 7 comprend une paroi interne 7a qui délimite avec le moteur 6 une veine annulaire de flux d'air chaud 100 qui s'étend le long de l'axe moteur X.

Le moteur 6 est fixé à la nacelle 5 au moyen de deux bifurcations 8a,8b diamétralement opposées et qui permettent d'assurer une cohésion mécanique de la turbomachine 5 et relient notamment entre elles la nacelle 5 et l'interveine 7.

La nacelle 5 comprend une paroi externe 5a et une paroi interne 5b et constitue l'enveloppe externe de la turbomachine 5. La nacelle 5 entoure l'interveine 7 avec laquelle elle est concentrique. La paroi externe 5a de la nacelle 5 forme la paroi externe de la turbomachine 1 tandis que la paroi interne 5b de la nacelle 5 forme, avec la paroi externe 7b de l'interveine 7, les parois d'un conduit de soufflante 200 qui s'étend le long de l'axe moteur X et qui reçoit la majorité du flux d'air P éjecté par la soufflante 6a lors de la rotation de cette dernière. Le conduit de soufflante 200 se prolonge jusqu'à l'arrière de la nacelle 5 où l'air est éjecté.

La turbomachine 4 comprend différents circuits de fluide 10 pour alimenter le moteur 6 en fluides L (non représenté sur la figure 1) inflammables nécessaires à son fonctionnement, comme, par exemple, le kérozène, l'huile ou le liquide hydraulique. Chaque circuit de fluide 10 comprend notamment des canalisations 11 dans lesquelles circule le fluide L, vers ou hors du moteur 6 et qui sont arrangées dans l'épaisseur de l'interveine 7 de la nacelle 5 ou d'une bifurcation 8a,8b.

On notera que sur la figure 1, un seul circuit de fluide 10 est représenté, en partie, à titre d'exemple : il s'agit du circuit d'huile qui arrangé dans l'interveine 7 pour faire circuler de l'huile dans le moteur 6 afin de le refroidir.

Le fonctionnement du moteur 6, génère une montée en température des fluides L. De manière connue, l'huile extraite du moteur 6 doit être refroidie avant de la réinjecter dans le moteur 6, ou encore le kérosène ou le liquide hydraulique s'échauffe dans l'environnement proche du moteur 6 et doivent être refroidis). Le fonctionnement du moteur 6 génère en outre l'émission de sons indésirables causé par l'écoulement du flux d'air P dans le conduit de soufflante 200.

Pour pallier à ses inconvénients, la turbomachine 4 comprend un système thermo-acoustique 20 associé à au moins un circuit de fluide 10 et qui est configuré pour réaliser une atténuation acoustique des sons émis lors du fonctionnement du moteur 6 et un refroidissement du fluide L du circuit de fluide 10.

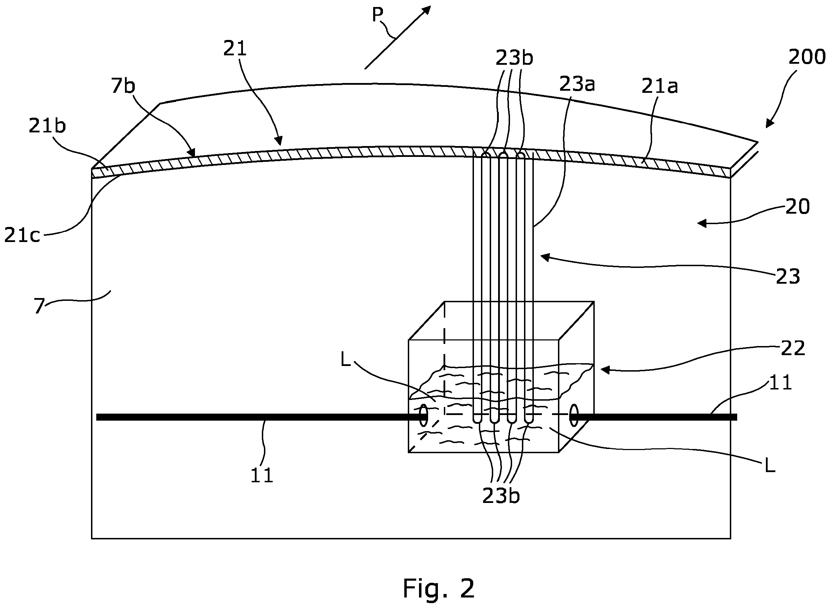

En relation avec la figure 2, le système thermo-acoustique 20 selon un mode de réalisation de l'invention comprend un échangeur 22 connecté à un circuit de fluide 10 et dans lequel transite le fluide L à refroidir, une structure d'atténuation acoustique 21 formant en tout ou partie une paroi 5b, 7b du conduit du conduit de soufflante 200 et qui est située à distance de l'échangeur 22, et un caloduc oscillant 23 se présentant sous la forme d'un tube 23a s'étendant dans un plan (par exemple un plan parallèle ou perpendiculaire à l'axe moteur X) entre l'échangeur 22 et la structure d'atténuation acoustique 21, le tube 23a ayant une forme de serpentin avec une pluralité de coudes 23b cintrés à 180° reçus alternativement dans l'échangeur 22 et ladite structure 21.

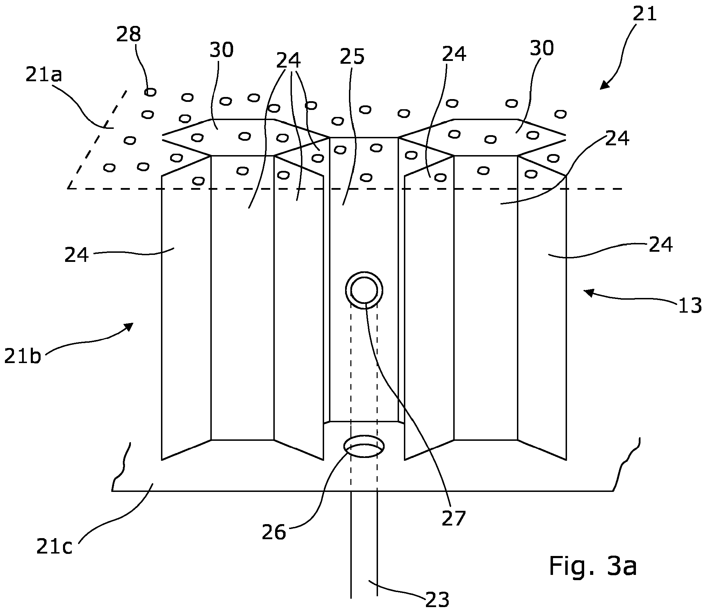

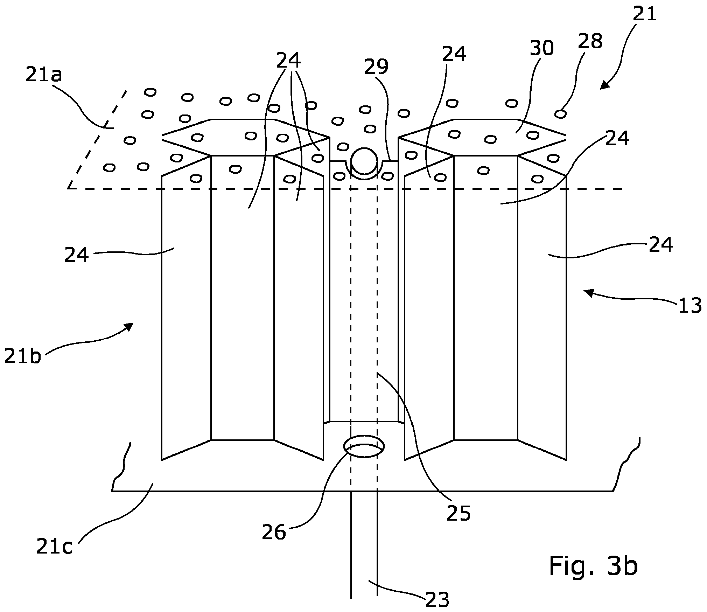

En relation avec les figures 3a et 3b, la structure d'atténuation acoustique 21 comprend un premier panneau 21a, un second panneau 21c distant du premier panneau 21a, et un noyau 21b interposé entre les deux panneaux 21a,21c.

Le premier panneau 21a est directement au contact du flux d'air P circulant dans le conduit de soufflante 200 et présente des perforations 28 qui sont dimensionnées de façon à ce qu'une partie du flux d'air P propulsé par la soufflante 6a puisse pénétrer dans le noyau 21b.

Le second panneau 21c comprend des orifices 26 pour le passage du caloduc 2. L'interface entre le caloduc 23 et le second panneau 21 c au niveau des orifices 26 est rendue étanche par l'utilisation de tout moyen approprié comme, par exemple, un joint ou un enduit d'étancheité.

Le noyau 21b est formé par :
- une pluralité de cloisons structurelles 24 s'étendant entre le premier et le second panneau 21a,21c et qui fixées à chacun desdits panneaux pour assurer la cohésion mécanique de la structure d'atténuation acoustique 21. La pluralité de cloisons structurelles 24 formant avec les deux panneaux 21a,21c, un réseau de cavités acoustiques 30, s'étendant entre les deux panneaux 21a,21c et où chaque cavité acoustique 30 communique avec le conduit de soufflante 200 via les perforations 28 pratiquées sur le premier panneau 21a.
- une pluralité de cloisons de support 25 des coudes 23a du caloduc 23, arrangées entre les deux panneaux 21a,21c, et supportant les coudes 23a du caloduc 23 reçus dans la structure d'atténuation acoustique 21 afin d'assurer l'intégrité structurelle de l'ensemble coudes + structure d'atténuation acoustique. Une cloison de support de caloduc 25 est, par exemple, une cloison qui est fixée à chacune desdites panneau 21a,21c et présente un orifice 27 au travers duquel passe le caloduc 23 (voir figure 3a), ou encore une cloison fixée au second panneau 21c et qui présente un bord libre 29, à distance du premier panneau 21a, conformé pour recevoir le coude 23b du caloduc 23 (voir figure 3b).

L'échangeur 22 est arrangé dans (l'épaisseur de) l'interveine 7, ou encore dans (l'épaisseur d') une bifurcation 8a, 8b.

On notera que dans l'exemple représenté aux figures 1 à 4, l'échangeur 22 et le caloduc 23 sont arrangés dans l'épaisseur de l'interveine 7 et la structure d'atténuation acoustique 21 forme une partie de la paroi extérieure 7b de l'interveine 7.

L'échangeur 22 se présente sous la forme d'un solide ayant une paroi de fond 22a, dit fond, et une paroi formant capot 22b, dit capot, parallèles l'une à l'autre et qui sont reliées entre elles par quatre parois latérales 22c deux à deux parallèles, et toutes perpendiculaires au fond 22a et au capot 22b.

Pour que le fluide L s'écoule dans l'échangeur 22, deux parois latérales 22c, de préférence en regard l'une de l'autre, sont chacune équipées d'un connecteur fluidique 31 permettant de connecter une canalisation 11 du circuit de fluide 10 auquel est associé l'échangeur 22 et laisser rentrer ou sortir le fluide L dans ou hors de l'échangeur 22. Ainsi le fluide L du circuit de fluide 10, sous l'action d'une pompe (non représentée) dudit circuit, pénètre dans l'échangeur 22 via un premier connecteur fluidique 31, circule dans l'échangeur 22 suivant un sens de circulation fluidique défini par la pompe, et ressort de l'échangeur 22 via un second connecteur fluidique 31.

Le caloduc oscillant 23 (connu aussi sous l'acronyme « PHP - pulsating heat pipe » pour caludoc pulsé) comprend un tube 23 capillaire partiellement rempli de fluide caloporteur présent naturellement en deux phases, liquide et gazeuse. Cette séparation de phases résulte principalement des forces de tension superficielle.

Les coudes 23b du caloduc 23 arrangés dans la structure d'atténuation acoustique 21 sont balayée par le flux d'air P propulsé par la soufflante 6a et les coudes 23b arrangés dans l'échangeur 22 baignent dans le fluide L chauffé par le moteur 6 (huile extraite du moteur, ou liquide hydraulique ou kérozène à refroidir). A titre d'exemple, lorsque le fluide L est de l'huile, la température dans l'échangeur 22 est de 80°C tandis que la température du flux d'air P est de l'ordre de 40°C.

Dans l'exemple illustré à la figure 2, le caloduc 23 est dit à boucle ouverte, avec ses deux extrémités borgnes. A des fins de compréhension uniquement, et pour ne pas surcharger la figure 2, le caloduc 23 représenté comprend quatre coudes 23b reçus dans l'échangeur 22 et trois coudes 23b reçus dans la structure d'atténuation acoustique 23a. Les extrémités borgnes du caloduc 23 sont reçus dans la structure d'atténuation acoustique 23a. La distance entre l'échangeur 22 et la structure d'atténuation acoustique 21 est, dans cet exemple, de l'ordre de 30 à 50 cm.

On notera que l'efficacité du caloduc 23 croit avec l'augmentation du nombre de coudes 23b. Ainsi de préférence, le caloduc 23 comprend de l'ordre d'une dizaine de coudes, par exemple douze, reçus dans l'échangeur 22 et de l'ordre d'une dizaine de coudes 23b, par exemple onze, reçus dans la structure d'atténuation acoustique 23a

Au niveau de la structure d'atténuation acoustique 21, le caloduc 23 traverse, au travers de plusieurs orifices 26, le second panneau 21c de la structure d'atténuation acoustique 21 et les coudes 23b sont reçus dans la structure d'atténuation acoustique 21 en étant supportés par des cloisons de support 25.

Au niveau de l'échangeur 22, le caloduc 23 traverse, au travers de plusieurs orifices, une des parois 22b de l'échangeur 22 et les coudes 23b du caloduc 23 s'étendent dans l'échangeur 22 de sorte à baigner par le fluide L en circulation. Le caloduc 23 s'étend dans l'échangeur, selon la configuration de l'échangeur 22 et du caloduc 23, par exemple, parallèlement ou perpendiculairement au sens de circulation du fluide L,

Dans le cas d'un écoulement d'air dans le conduit de soufflante 200, le flux d'air P s'écoule le long du premier panneau 21a de la structure d'atténuation acoustique 21 et les perforations 28 assurent la pénétration d'une partie de l'air P dans les cavités acoustiques 30. Chaque cavité acoustique 30 agit comme un résonnateur quart d'onde et permet d'atténuer les sons émis par la circulation de l'air dans le conduit de soufflante 200.

Les coudes 23b du caloduc 23 arrangés dans la structure d'atténuation acoustique 21 sont soumis à la température du flux d'air circulant P dans le conduit de soufflante 200. Du point de vue thermique, en considérant le circuit thermique formé par le caloduc 23, l'échangeur 22 et la structure d'atténuation acoustique 21, ladite structure forme un condenseur.

Les coudes 23b du caloduc 23 arrangés dans l'échangeur 22 sont soumis à la température du fluide L en circulation. Du point de vue thermique, en considérant le circuit thermique formé par le caloduc 23, l'échangeur 22 et la structure d'atténuation acoustique 21, l'échangeur 22 forme un évaporateur.

Le fluide du caloduc oscillant est refroidi dans le condenseur et chauffé dans l'évaporateur. Les gradients de température génèrent des fluctuations de pression associées à la génération, à la croissance, et à l'oscillation (la forme du serpentin permet l'oscillation des bulles de vapeur dans le condenseur. Ces fluctuations entraînent une circulation oscillatoire du fluide permettant le transport de masse et donc de chaleur entre le condenseur et l'évaporateur.

L'invention permet d'intégrer un système de refroidissement de fluide 20 à une structure d'atténuation acoustique 21 tout en déportant le fluide L à réguler en température du conduit de soufflante 200 pour limiter le risque de fuite non contrôlé dans ce dernier.

Le fluide caloporteur situé à l'intérieur du tube 23a du caloduc 23 est un fluide compatible aux applications aéronautique et aux conditions extrêmes de vol (température, pression ...), comme par exemple l'eau, l'argent, le lithium, le sodium, l'éthanol, le méthanol. Le fluide caloporteur rempli, par exemple, 50 % du volume intérieur total du tube 23a.

Les cloisons structurelles et de support de caloduc 24,25 de la structure d'atténuation acoustique 21 sont réalisées dans un matériau ayant une forte conduction thermique, comme par exemple un matériau métallique.

L'échangeur 22 est réalisé dans un matériau métallique, comme par exemple, le titane ou l'aluminium, ou encore dans un matériau composite.

En variante (non illustrée), le système de refroidissement de fluide 20 comprend plusieurs caloducs 23 tels que décrit ci-dessus. Les coudes 23b de ce ces derniers qui sont arrangés dans la structure d'atténuation acoustique 21 sont, de préférence, disposées dans ladite structure selon un motif répétitif afin de pourvoir automatiser l'assemblage des caloducs 23 avec la structure d'atténuation acoustique 21 lors de la fabrication de cette dernière.

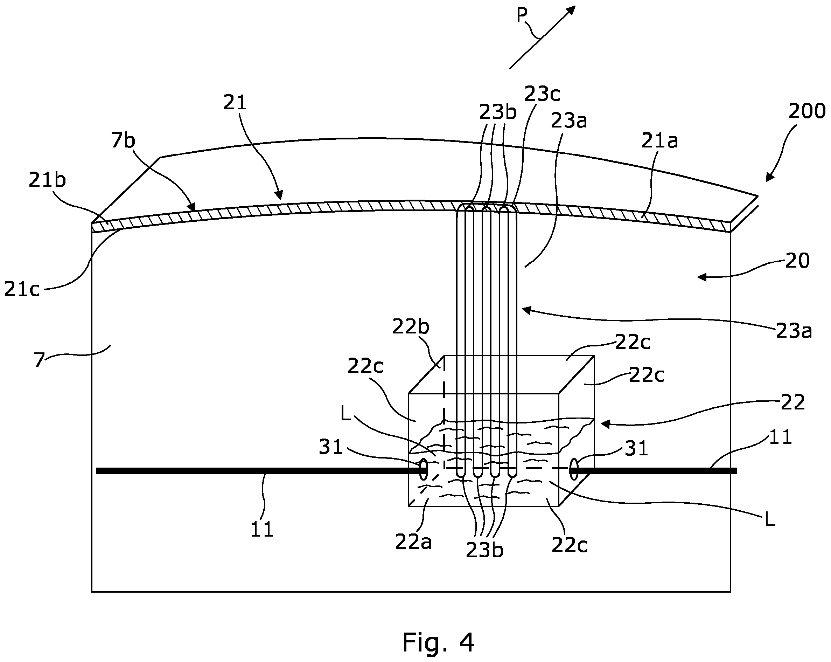

Dans une variante de l'invention, et en référence avec la figure 4, le caloduc 23 est à boucle fermée et ne présente alors pas d'extrémité borgne. Dans l'exemple illustré à la figure 4, le caloduc 23 comprend quatre coudes 23b reçus dans l'échangeur 22 et trois coudes 23b reçus dans la structure d'atténuation acoustique 21. Une portion 23c, arrangée dans la structure d'atténuation acoustique, assure le bouclage du tube 23a.

## Revendications

1. Turbomachine à double flux (4) pour aéronef comprenant un moteur (6) prévu pour entrainer en rotation une soufflante (6a); une interveine annulaire (7) concentrique au moteur (6) ; une nacelle (5) concentrique à l'interveine (7), l'interveine et la nacelle définissant entre elles un conduit de soufflante (200) dans lequel s'écoule un flux d'air (P) lors de rotation de la soufflante (6a) ; au moins un circuit de fluide (10) configuré pour faire transiter un fluide (L) vers ou hors du moteur (6) ; la turbomachine (4) comprenant un système thermo-acoustique (20) associé à un circuit de fluide (10), **caractérisée en ce que** le système thermo-acoustique (20) comprend un échangeur (22) connecté à un circuit de fluide (10) et dans lequel transite un fluide (L) à refroidir, une structure d'atténuation acoustique (21) formant en tout ou partie une paroi (5b, 7b) du conduit du conduit de soufflante (200), ladite structure étant située à distance de l'échangeur (22), et un caloduc oscillant (23) comprenant un tube (23a) s'étendant, dans un plan, entre l'échangeur (22) et la structure d'atténuation acoustique (21), le tube ayant un forme de serpentin avec une pluralité de coudes (23b) cintrés à 180° reçus alternativement dans l'échangeur (22) et ladite structure (21).

2. Turbomachine (4) selon la revendication 1, **caractérisée en ce que** le caloduc (23) est à boucle ouverte.

3. Turbomachine (4) selon la revendication 2, **caractérisée en ce que** le caloduc (23) comprend deux extrémités borgnes.

4. Turbomachine (4) selon l'une quelconque des revendications 1 à 3, **caractérisée en ce que** la structure d'atténuation acoustique (21) comprend un premier panneau (21a) au contact du flux d'air (P) circulant dans le conduit de soufflante (200) et présentant des perforations (28); un second panneau (21c) comprenant une pluralité d'orifices (26) pour le passage du caloduc (23); un noyau (21b) comprenant une pluralité de cloisons structurelles (24) formant avec les deux panneaux (21a,21c), un réseau de cavités acoustiques (30) s'étendant entre les deux panneaux (21a,21c) et où chaque cavité acoustique (30) communique avec le conduit de soufflante (200) via les perforations (28), le noyau 21b) comprenant en outre une pluralité de cloisons de support (25) des coudes (23b) du caloduc (23), lesdites cloisons (25) supportant les coudes (23b) du caloduc 23 reçus dans la structure d'atténuation acoustique (21).

5. Turbomachine (4) selon la revendication 4, **caractérisée en ce que** chacun des cloisons de support (25) est fixée à chacun desdits panneau (21a,21c) et présente un orifice (27) au travers duquel passe le caloduc (23).

6. Turbomachine (4) selon la revendication 4, **caractérisée en ce que** chacune des cloisons de support (25) est fixée au second panneau (21c) et présente un bord libre (29), à distance du premier panneau (21a), conformé pour recevoir le coude (23b) du caloduc (23).

7. Turbomachine (4) selon la revendication 4, **caractérisée en ce que** l'échangeur (22) est situé à distance du second panneau (21c).

8. Turbomachine (4) selon l'une quelconque des revendications 1 à 7, **caractérisée en ce que** l'échangeur (22) est arrangé dans l'interveine (7).

9. Turbomachine (4) selon l'une quelconque des revendications 1 à 7, la turbomachine (4) comprenant deux bifurcations (8a,8b) diamétralement opposées reliant la nacelle (5) et l'interveine (7), **caractérisée en ce que** l'échangeur (22) est arrangé dans l'une des bifurcations (8a,8b).

## Patentansprüche

1. Mantelstrom-Turbotriebwerk (4) für ein Luftfahrzeug, umfassend einen Motor (6), der dafür vorgesehen ist, ein Gebläse (6a) drehend anzutreiben; einen ringförmigen Raum zwischen Primär- und Sekundärstromkanal (7), der zum Motor (6) konzentrisch ist; eine Gondel (5), die zu dem Raum zwischen Primär- und Sekundärstromkanal (7) konzentrisch ist, wobei der Raum zwischen Primär- und Sekundärstromkanal und die Gondel zwischen sich einen Gebläsekanal (200) definieren, in welchem während der Drehung des Gebläses (6a) ein Luftstrom (P) strömt; wenigstens einen Fluidkreislauf (10), der dafür ausgelegt ist, ein Fluid (L) zum oder aus dem Motor (6) durchströmen zu lassen; wobei das Turbotriebwerk (4) ein thermoakustisches System (20) umfasst, das einem Fluidkreislauf (10) zugeordnet ist,
**dadurch gekennzeichnet, dass** das thermoakustische System (20) einen Austauscher (22), der mit einem Fluidkreislauf (10) verbunden ist und in welchem ein zu kühlendes Fluid (L) durchströmt, eine akustische Dämpfungsstruktur (21), die vollständig oder teilweise eine Wand (5b, 7b) des Kanals des Gebläsekanals (200) bildet, wobei sich diese Struktur in einem Abstand von dem Austauscher (22) befindet, und ein oszillierendes Wärmerohr (23) umfasst, welches ein Rohr (23a), das sich, in einer Ebene, zwischen dem Austauscher (22) und der akustischen Dämpfungsstruktur (21) erstreckt, umfasst, wobei das Rohr eine Schlangenform mit einer Vielzahl von um 180° gebogenen Winkelstücken (23b) aufweist, die abwechselnd in dem Austauscher (22) und in der Struktur (21) aufgenommen sind.

2. Turbotriebwerk (4) nach Anspruch 1, **dadurch gekennzeichnet, dass** das Wärmerohr (23) mit offenem Regelkreis betrieben wird.

3. Turbotriebwerk (4) nach Anspruch 2, **dadurch gekennzeichnet, dass** das Wärmerohr (23) zwei geschlossene Enden umfasst.

4. Turbotriebwerk (4) nach einem der Ansprüche 1 bis 3, **dadurch gekennzeichnet, dass** die akustische Dämpfungsstruktur (21) umfasst: eine erste Platte (21a), die mit dem im Gebläsekanal (200) strömenden Luftstrom (P) in Kontakt steht und Perforationen (28) aufweist; eine zweite Platte (21c), die mehrere Öffnungen (26) für den Durchgang des Wärmerohres (23) umfasst; einen Kern (21b), der mehrere strukturelle Trennwände (24) umfasst, die mit den zwei Platten (21a, 21c) ein Netz von akustischen Hohlräumen (30) bilden, das sich zwischen den zwei Platten (21a, 21c) erstreckt, und wobei jeder akustischen Hohlraum (30) mit dem Gebläsekanal (200) über die Perforationen (28) in Verbindung steht, wobei der Kern (21b) außerdem mehrere Stütztrennwände (25) der Winkelstücke (23b) des Wärmerohres (23) umfasst, wobei die Trennwände (25) die Winkelstücke (23b) des Wärmerohres (23) stützen, die in der akustischen Dämpfungsstruktur (21) aufgenommen sind.

5. Turbotriebwerk (4) nach Anspruch 4, **dadurch gekennzeichnet, dass** jede der Stütztrennwände (25) an jeder der Platten (21a, 21c) befestigt ist und eine Öffnung (27) aufweist, durch welche das Wärmerohr (23) verläuft.

6. Turbotriebwerk (4) nach Anspruch 4, **dadurch gekennzeichnet, dass** jede der Stütztrennwände (25) an der zweiten Platte (21c) befestigt ist und einen freien Rand (29) in einem Abstand von der ersten Platte (21a) aufweist, der dafür ausgebildet ist, das Winkelstück (23b) des Wärmerohres (23) aufzunehmen.

7. Turbotriebwerk (4) nach Anspruch 4, **dadurch gekennzeichnet, dass** sich der Austauscher (22) in einem Abstand von der zweiten Platte (21c) befindet.

8. Turbotriebwerk (4) nach einem der Ansprüche 1 bis 7, **dadurch gekennzeichnet, dass** der Austauscher (22) in dem Raum zwischen Primär- und Sekundärstromkanal (7) angeordnet ist.

9. Turbotriebwerk (4) nach einem der Ansprüche 1 bis 7, wobei das Turbotriebwerk (4) zwei einander diametral gegenüberliegende Abzweigungen (8a, 8b) umfasst, welche die Gondel (5) und den Raum zwischen Primär- und Sekundärstromkanal (7) verbinden, **dadurch gekennzeichnet, dass** der Austauscher (22) in einer der Abzweigungen (8a, 8b) angeordnet ist.

## Claims

1. Bypass turbomachine (4) for an aircraft comprising an engine (6) designed to turn a fan (6a); an annular interduct (7) concentric with the engine (6); a nacelle (5) concentric with the interduct (7), the interduct and the nacelle between them defining a fan duct (200) in which an air flow (P) flows when the fan (6a) turns; at least one fluid circuit (10) configured to cause a fluid (L) to pass towards or away from the engine (6); the turbomachine (4) comprising a thermo-acoustic system (20) associated with a fluid circuit (10), **characterized in that** the thermo-acoustic system (20) comprises an exchanger (22) connected to a fluid circuit (10) and through which a fluid (L) that is to be cooled passes, an acoustic noise-attenuation structure (21) forming, in full or in part, a wall (5b, 7b) of the duct of the fan duct (200), the said structure being situated some distance from the exchanger (22), and a pulsating heat pipe (23) comprising a tube (23a) extending, in a plane, between the exchanger (22) and the acoustic noise attenuation structure (21), the tube having a serpentine form with a plurality of elbows (23b) bent over at 180° housed alternately in the exchanger (22) and the said structure (21).

2. Turbomachine (4) according to Claim 1, **characterized in that** the heat pipe (23) is open-loop.

3. Turbomachine (4) according to Claim 2, **characterized in that** the heat pipe (23) has two blind ends.

4. Turbomachine (4) according to any one of Claims 1 to 3, **characterized in that** the acoustic sound attenuation structure (21) comprises a first panel (21a) in contact with the air flow (P) circulating in the fan duct (200) and having perforations (28); a second panel (21c) comprising a plurality of orifices (26) for the passage of the heat pipe (23); a core (21b) comprising a plurality of structural partitions (24) that, with the two panels (21a,21c), form a network of acoustic cavities (30) extending between the two panels (21a,21c) and in which each acoustic cavity (30) communicates with the fan duct (200) via the perforations (28), the core (21b) further comprising a plurality of support partitions (25) that support the elbows (23b) of the heat pipe (23), the said partitions (25) supporting the elbows (23b) of the heat pipe (23) that are housed in the acoustic sound attenuation structure (21).

5. Turbomachine (4) according to Claim 4, **characterized in that** each of the support partitions (25) is fixed to each of the said panels (21a,21c) and has an orifice (27) through which the heat pipe (23) passes.

6. Turbomachine (4) according to Claim 4, **characterized in that** each of the support partitions (25) is fixed to the second panel (21c) and has a free edge (29), some distance from the first panel (21a), configured to accept the elbow (23b) of the heat pipe (23).

7. Turbomachine (4) according to Claim 4, **characterized in that** the exchanger (22) is situated some distance from the second panel (21c).

8. Turbomachine (4) according to any one of Claims 1 to 7, **characterized in that** the exchanger (22) is arranged in the interduct (7).

9. Turbomachine (4) according to any one of Claims 1 to 7, the turbomachine (4) comprising two diametrically opposed forks (8a,8b) connecting the nacelle (5) and the interduct (7), **characterized in that** the exchanger (22) is arranged in one of the forks (8a,8b).
